# EUROPEAN PATENT SPECIFICATION

(11) **EP 2 873 207 B1**
(45) Date of publication and mention of the grant of the patent: **24.10.2018**
(21) Application number: 13736888.2
(22) Date of filing: 10.07.2013
(51) Int. Cl.: H04W 28/02, H04N 21/60, H04L 12/835, H04L 29/06, H04N 21/44, H04N 21/462, H04N 21/6377, H04N 21/6373

(54) **MEDIA PREFILL PERFORMANCE IMPROVEMENT**
LEISTUNGSVERBESSERUNG BEI MEDIENVORFÜLLUNGEN
AMÉLIORATION DES PERFORMANCES DE PRÉ-REMPLISSAGE MULTIMÉDIA

(30) Priority: 16.07.2012 US 201213549951
(43) Date of publication of application: 20.05.2015
(73) Proprietor: Nokia Solutions and Networks Oy, 02610 Espoo (FI)
(72) Inventor: HARRIS, John, Glenview, Illinois 60025 (US)
(74) Representative: Borgström, Markus
(86) International application number: PCT/EP2013/064588
(87) International publication number: WO 2014/012830

(56) References cited:
- "3rd Generation Partnership Project; Technical Specification Group Services and System Aspects; Transparent end-to-end Packet-switched Streaming Service (PSS); Protocols and codecs (Release 11)", 3GPP STANDARD; 3GPP TS 26.234, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG4, no. V11.0.0, 8 March 2012 (2012-03-08), pages 1-169, XP050580063, [retrieved on 2012-03-08]
- "Universal Mobile Telecommunications System (UMTS); LTE; End-to-end transparent streaming service; General description (3GPP TS 26.233 version 8.0.0 Release 8); ETSI TS 126 233", ETSI STANDARD, EUROPEAN TELECOMMUNICATIONS STANDARDS INSTITUTE (ETSI), SOPHIA ANTIPOLIS CEDEX, FRANCE, vol. 3-SA4, no. V8.0.0, 1 January 2009 (2009-01-01), XP014043243,
- EDITOR: "HTTP-based Streaming and Download Services - Use cases, require- ments and working assumptions: Permanent Document", 3GPP DRAFT; S4-110174-PD-DASHV05, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG4, no. Berlin, Germany; 20110110, 14 January 2011 (2011-01-14), XP050527660, [retrieved on 2011-01-14]

## Description

### TECHNICAL FIELD:

The teachings in accordance with the exemplary embodiments of this invention relate generally to improving user experience by intelligently performing prefilling at a user device. More specifically, the invention relates to improving capacity and user experience by allowing user equipment to perform prefilling of media over hypertext markup language signaling by taking loading into account on a longer timescale, and then enabling taking loading into account on a much shorter timescale, while also taking into account link speed and/or media signal compression for the signaling.

### BACKGROUND:

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

Certain abbreviations that may be found in the description and/or in the Figures are herewith defined as follows:
- ACK: acknowledgement
- BE: best effort
- CAN-EG: content area network enabling gateway
- CDN: content distribution network
- eNB: eNode B
- IP: internet protocol
- IP-CAN: IP connectivity access network
- GBR: guaranteed bit-rate
- HTML: hypertext markup language
- HTTP: hypertext transfer protocol
- LTE: long term evolution
- MAC: media access control
- MCC: mobile country code
- MCN: mobile network code
- MME: mobility management entity
- MNO: mobile network operator
- MO: media optimizer
- NBG: nsn browsing gateway
- PCEF: policy and charging enforcement function
- PCRF: policy and charging rules function
- PDF: policy decision function
- PRB: physical resource block
- QoE: quality of experience
- QoS: quality of service
- RSM: radio system module
- TCP/IP: transmission control protocol/internet protocol
- UE: user equipment
- URL: uniform resource locator
- VLR: visitor location register
- VNO: visitor location register

Prior-art document "3rd Generation Partnership Project; Technical Specification Group Services and System Aspects; Transparent end-to-end Packet-switched Streaming Service (PSS); Protocols and codecs (Release 11)",3GPP STANDARD; 3GPP TS 26.234, describes the protocols and codecs for the PSS within the 3GPP system.

The policy and charging rules function (PCRF) is designated in real-time to determine policy rules in a multimedia network. The PCRF is a software component that operates at the network core and efficiently accesses subscriber databases and other specialized functions, such as charging systems, in a scalable, reliable, and centralized manner.

Because it operates in real time, the PCRF has an increased strategic significance and broader potential role than traditional policy engines.

The PCRF is the part of the network architecture that aggregates information to and from the network, operational support systems, and other sources (such as portals) in real time, supporting the creation of rules and then automatically making intelligent policy decisions for each subscriber active on the network. Such a network might offer multiple services, quality of service (QoS) levels, and charging rules.

Video or media prefilling can occur while the media is being run at a device. The prefilling is generally visible in the status bar as being the buffer content downloaded which has not yet been viewed. The status bar may show this prefill as being after or to the right of a moving arrow which represents the currently played point of the media, such as video. Video prefilling benefits user experience when downloading media, such as to watch a video.

However, prefilling currently does not sufficiently take into account a link speed or a load cell/eNB carrying the bearer providing the media signaling which is being prefilled. Further, an explicit indication from a network device such as a base station indicating when the cell becomes under or over loaded can be too slow to enable the full benefits of this prefill mechanism. For example, during the time interval when the system becomes less loaded, a controller associated with a prefill signal, such as in a base station or media optimizer, may continue to operate as if the system is still more loaded. Thus, there is a problem in that the controller will miss the opportunity to perform additional prefilling. Similarly, during the time interval when the system becomes more loaded, the controller may continue to operate as if the system is less loaded. In this situation, prefilling video users may consume extra system capacity which otherwise would not be "wasted" on prefilling. Thus, for at least these reasons the benefits of prefilling for the user or the operator will be effectively mitigated.

### SUMMARY

In an exemplary aspect of the invention, there is a method implemented in a processor of a user device of a wireless communication network, comprising determining a prefill level, characterized in that the prefill level is for media being delivered over a hypertext markup language signal being delivered to the user device but the media associated with the prefill level is not yet viewed at the user device, where the determining the prefill level comprises determining whether the prefill level is greater than or less than a threshold; for the case that it is determined that the prefill level is greater than the threshold, sending by the user device towards at least one network node of the wireless communication network messaging comprising a request to decrease at least one of a priority level and a bit rate of a bearer of the media signal; and for the case that it is determined that the prefill level is less than the threshold, sending by the user device towards the wireless communication network messaging comprising a request to increase the at least one of a priority level and a bit rate of the media signal.

In another exemplary aspect of the invention, there is a user device of a wireless communication network, comprising at least one processor, and at least one memory including computer program code, where the at least one memory and the computer program code are configured, with the at least one processor, to cause the user device to at least: determine a prefill level of a media, characterized in that the prefill level is being delivered over a hypertext markup language signal being delivered to the user device but the media associated with the prefill level is not yet viewed at the user device, where the determining the prefill level comprises determining whether the prefill level is greater than or less than a threshold; for the case that it is determined that the prefill level is greater than the threshold, send towards at least one network node of the wireless communication network messaging comprising a request to decrease at least one of a priority level and a bit rate of a bearer of the media signal; and for the case that it is determined that the prefill level is less than the threshold, send towards the wireless communication network messaging comprising a request to increase the at least one of a priority level and a bit rate of the media signal.

In another exemplary aspect of the invention, there is a computer readable memory embodying at least one computer program code, the at least one computer program code executed by at least one processor, according to claim 12.

### BRIEF DESCRIPTION OF THE DRAWINGS

The foregoing and other aspects of embodiments of this invention are made more evident in the following Detailed Description, when read in conjunction with the attached Drawing Figures, wherein:
FIGS. 1A and 1B illustrate benefits of prefill video;
FIG. 1C illustrates an average viewer abandonment rate by viewing time;
FIG. 2 illustrates a simplified block diagram of exemplary electronic devices that are suitable for use in practicing various exemplary embodiments of this invention;
Figures 3A, 3B, and 3C illustrate types of media over hypertext markup language signaling with and without prefilling;
Figure 4 illustrates a prefill state based bearer update in accordance with the exemplary embodiments of the invention;
Figure 5 illustrates another prefill state based bearer update in accordance with the exemplary embodiments of the invention;
Figure 6 illustrates prefill state based bearer update using a determination of bearer utilization in accordance with the exemplary embodiments of the invention;
Figure 7 illustrates compression updates for the media stream prefill based on link speed and threshold settings in accordance with the exemplary embodiments of the invention;
Figure 8 refers to Figure 7 and illustrates adjusting compression for the media stream prefill based on estimated current and pending link speed and threshold settings in accordance with the exemplary embodiments of the invention; and
Figure 9 is a simplified block diagram to illustrate a method in accordance with the exemplary embodiments of the invention.

### DETAILED DESCRIPTION:

The teachings in accordance with the exemplary embodiments of this invention relate to improving bearer capacity and user experience by allowing prefilling of media over hypertext markup language signaling at user equipment and by taking into account link speed and/or media signal compression for the signaling.

As stated above prefilling can benefit user experience when downloading media, such as to watch a video. Prefill can be controlled with a device such as a content aware network enabling gateway (CAN-EG) between user equipment (UE) and a device, such as a media optimizer device or another device providing download and/or streaming services. The CAN-EG can provide metrics to authorized applications and services based on policy rules to facilitate service level agreement compliance or quality of service (QOS) requirements.

The exemplary embodiments of the invention enable prefilling operations that are loading aware. In accordance with an embodiment of the invention, messaging, such as eNB utilization messaging, enables the prefilling to become living we are on a long timescale, wherein an overshoot or undershoot can occur, i.e. prefilling continues even when loading spikes. The invention further goes on to enable prefilling to become aware of loading on a very short timescale, through the PCRF such that the eNB will use its knowledge of the current priority level/minimum bit rate required for the video flow such that when the user has been prefilled it will instantaneously deferred that traffic at the eNB.

In addition, the embodiments of the invention can utilize a policy and charging rules function (PCRF) to control prefilling of media over hypertext markup language signaling at user equipment. The PCRF is an important part of IP multimedia subsystem (IMS) architectures. It works across wireless networks and can come pre-integrated in a network device such as an information technology server. PCRF is often referred to as policy server or -- formerly -- a policy decision function (PDF). The PCRF defines and provides the policy and charging rules that are used in the policy enforcement points for policy control and flow-based charging control at different network devices. The PCRF has been developed for the 3GPP Release 7 and it combines the charging rules with the policy decision function of earlier 3GPP architecture releases. PCRF can maintain IP-CAN sessions associated with users.

Policy and charging enforcement function (PCEF) is a function that receives the policy and charging rules from the PCRF, detects traffic, and enforces the rules for classifying the traffic on service data flows. The control for the quality of service (QoS) is applied per service data flow in the PCEF. The PCEF can be co-located in a packet data network (PDN) gateway. The PCRF can interface with the main packet gateway and take charging enforcement decisions on its behalf. The centralized device can act as a policy decision point (PDP) for the wireless operator and gets as granular as individual subscribers. For example, service providers can use PCRF to charge subscribers based on their volume of usage of high-bandwidth applications, charge extra for QoS guarantees, and limit application usage while a user is roaming, or lower the bandwidth of wireless subscribers using heavy-bandwidth apps during peak usage times.

A QoS authorization process consists of the derivation of the parameters Authorized QoS Class Identifier (QCI) and Authorized Maximum/Guaranteed Data Rate UL/DL. When a session is initiated or modified the PCRF shall derive Authorized IP QoS parameters (e.g. QCI, Authorized Maximum/Guaranteed Data Rate, priority DL/UL) from the service information. If the selected Bearer Control Mode (BCM) is UE-only this process shall be performed according to the mapping rules to avoid undesired misalignments with user equipment QoS parameters mapping. Each Authorized IP QoS Parameter should be set to the highest value requested for the IP flow(s) of that media component by any of the active forked responses. The exemplary embodiments of the invention enable such mapping rules to be created or changed taking into account link speed and/or media signal compression for the media over hypertext markup language signaling at the user equipment.

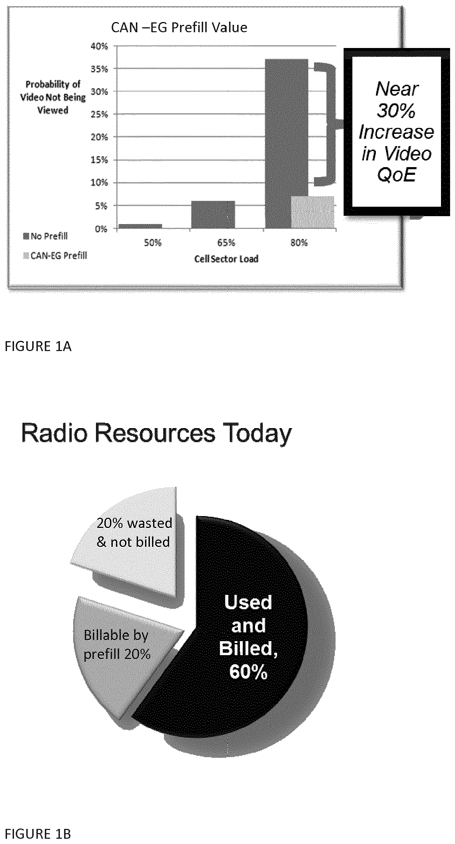

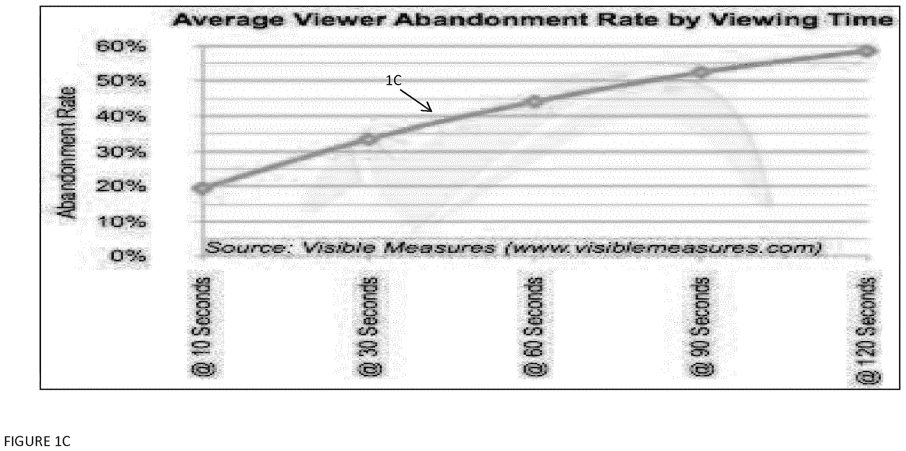

As illustrated in Figure 1A, the probability of a video being continuously viewed without video freezing is 30% higher with optimized/controlled prefill than without the optimized/controlled prefill. Media or video prefill improves user experience. The advantages of the invention include that resources that were wasted today may now be used for prefilling. In addition, with prefilling a user experience is improved as pre-filled video users can stop prefilling (and play higher quality video) when there is a loading spike, can continue play-out when going in and out of a coverage area, and can more quickly fast forward When using the prefill of the media stream. Further, with regards to Figure 1B, it is illustrated how operators also benefit in that there is a 30% increase in billable resources using prefills (30% ∼=20%/60%). As shown in Figure 1B, using prefill, an operators billable increased by 30% based on revenue for resources that would have been wasted. Further, Figure 1C illustrates, as shown by line 1C, that the average abandonment viewer rate is high.

However, as similarly stated above a rate of the prefill signaling at user equipment does not currently take into account a load of a bearer providing the media signaling being prefilled. As stated above, an adjustment of such a rate of prefilling cannot be performed fast enough such as to prevent or stop over throttling of the prefill after a bearer resource becomes more loaded. The exemplary embodiments of the invention can be used to overcome these problems. In accordance with the exemplary embodiments of the invention there is an automated mechanism for updating QoS associated with user equipment in reaction to a notification of a media over hypertext markup language signal prefill level or depth. Further, the exemplary embodiments of the invention provide for updating the QoS through a PCRF. In addition, the exemplary embodiments of the invention provide that at least one of the determination of the prefill level and the signaling of the prefill level information is performed using hypertext transfer protocol (HTTP) signaling, such as related to hypertext markup language (HTML) operated video stream, regarding the media signal prefill level or depth. In addition, in accordance with the exemplary embodiments, this signaling can be using TCP/IP and/or other signaling such as cellular signaling.

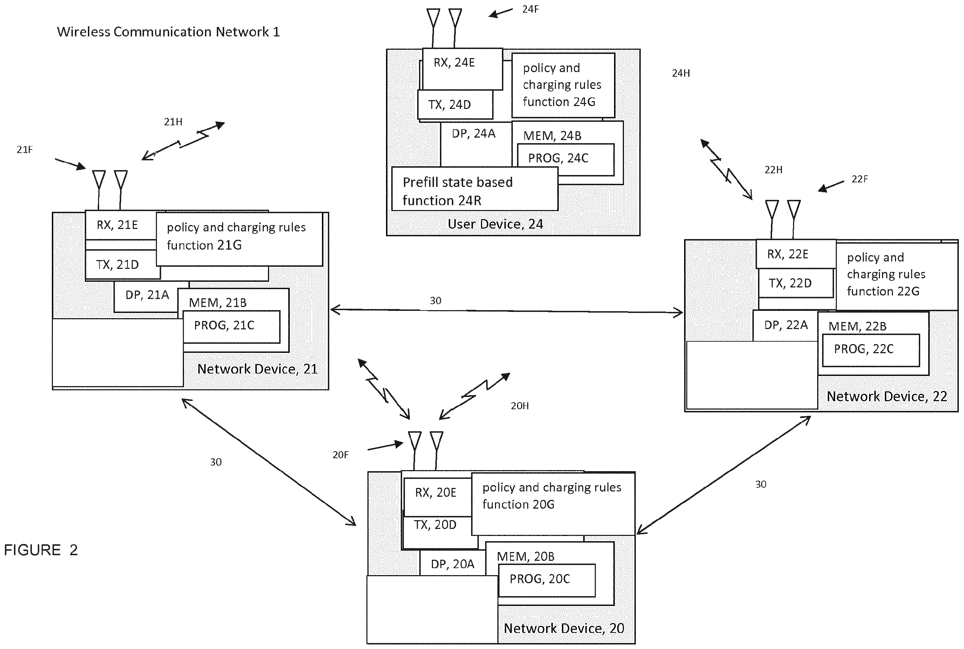

A reference is now made to Figure 2 for illustrating a simplified block diagram of various electronic devices and apparatus that are suitable for use in practicing the exemplary embodiments of this invention. Figure 2 illustrates a wireless communication network 1, which may be a cellular network, or a combination of wireless communication types, any of which would benefit from the invention. In Figure 2 network devices 20, 21 and 22, are adapted for communication over a wireless link (not specifically shown) with mobile apparatuses, such as mobile terminals, UEs or user devices 24. The network devices 20, 21 and 22 can include WLAN access points, base stations, media optimizers, Nokia Siemens Networks browsing gateway, and/or any other wireless devices. The UEs or user devices 24 can be any device in the wireless communication network 1 enabled to operate in accordance with the exemplary embodiments of the invention as described above. In addition, user devices 24 can be any of PDAs, cell phones, tablets, laptops, other any other type of mobile devices. The user devices 24 as described herein may be referred to in a non-limiting manner as subscriber stations. The network devices 20, 21 and 22 may be embodied in a network node of a communication network, such as embodied in a base station of a cellular network or another device of the cellular network. Similarly, the network devices 20, 21 and 22 can be configured to perform internet protocol communications and/or routing function. In one particular implementation, any of the network devices 20, 21 and 22 may be incorporated in a cellular communication device.

The network device 20 includes processing means such as at least one data processor (DP) 20A, storing means such as at least one computer-readable memory (MEM) 20B storing at least one computer program (PROG) 20C, and may also comprise communicating means such as a transmitter TX 20D and a receiver RX 20E for bidirectional wireless communications with the user device 24 via one or more antennas 20F. The RX 20E and the TX 20D are each shown as being embodied with a at least one antenna 20F in a radio-frequency front end chip, which is one non-limiting embodiment; the at least one antenna 20F may be a physically separate but electrically coupled component. Further, the network device 20 incorporates a policy and charging rules function 20G which is coupled to at least the DP 20A, the MEM 20B and the PROG 20C of the network device 20. The policy and charging rules function 20G to be used to perform operations of at least updating QoS associated with the user device 24 and the media signaling bearers 20H, 21H, and/or 22H, as in accordance with the exemplary embodiments of the invention as at least described herein.

The network node 21 similarly includes processing means such as at least one data processor (DP) 21A, storing means such as at least one computer-readable memory (MEM) 21B storing at least one computer program (PROG) 21C, and may also comprise communicating means such as a transmitter TX 21D and a receiver RX 21E for wireless communications, such as prefill level related communications and media signaling 21H, with other apparatus of Figure 2 via one or more antennas 21F. Using the policy and charging rules functions 21G, the network device 21 is at least enabled to perform the exemplary operations as in accordance with the exemplary embodiments of the invention, as described herein, such as from any of the other devices as illustrated in Figure 2.

Similarly, the network device 22 includes processing means such as at least one data processor (DP) 22A, storing means such as at least one computer-readable memory (MEM) 22 storing at least one computer program (PROG) 22C for processing of bidirectional signaling such as signaling received or transmitted via the antennas 22F, in accordance with the exemplary embodiments. Similar to the user device 21 the network device 22 is at least enabled, using the policy and charging rules 22G, to perform operations of at least updating QoS associated with the user device 24 and the media signaling bearers 20H, 21H, and/or 22H, in accordance with the exemplary embodiments of the invention.

The user device 24 includes its own processing means such as at least one data processor (DP) 24A, storing means such as at least one computer-readable memory (MEM) 24B storing at least one computer program (PROG) 24C, and may also comprise communicating means such as a transmitter TX 24D and a receiver RX 24E and a wireless links 24H for wireless communications including media signals with network devices 20, 21, and/or 22 as detailed above via its antennas 24F. Thus, similar to the user devices 21 and 22 the user device 24 is at least enabled, using the prefill state based function 24R and the policy and charging rules function 24G, to perform the operations including prefill state based messaging and/or policy control and charging rules messaging communicated via the media signaling bearer 24H, in accordance with the exemplary embodiments of the invention. In addition, while the network devices 20, 21 and 22 may be described as acting as a centralized media transfer nodes, the disclosure included herein may also apply to mesh networks.

In addition, illustrated lines 30 between the network devices 20, 21, and 22 represent backhaul links. The backhaul links 30 may be wired and/or wireless. The backhaul links 30 may be used, instead of or in addition to wireless links 20H, 21H, and 22H, at least to allow prefill state based messaging and/or policy control and charging rules messaging between some or all of the network devices in accordance with the exemplary embodiments of the invention.

In addition, as illustrated in Figure 2 the user device 24 and network devices 20, 21, and 22 include a prefill state based function 24R, 20R, 21R, and 22R, respectively. These functions, as well as the policy and charging rules function 24G are configured to utilize the antenna 24F and the media signaling bearer 24H. As similarly stated above, although the embodiments of the invention may be described with regards to a wireless communication network, this is non-limiting and the invention can be used to benefit any communication type such as a cellular network. In addition, although three network devices are illustrated in Figure 2, this is non-limiting and the invention may be practiced using less or more network devices.

In accordance with an exemplary embodiment of the invention there is an automated mechanism for updating QoS through the PCRF in reaction to notification of media over hypertext markup language prefill depth. In accordance with the exemplary embodiments there is:
▪ A first communication element detecting a first event comprising that a user device media over hypertext markup language prefill has more than a threshold number of seconds of prefill (beyond "just-in-time"),
▪ The second communication element, in response to receiving signaling that the first event has been detected, performing an update to the QOS profile for that video user through the PCRF (or Media optimizer (MO) function)

In accordance with an exemplary embodiment of the invention there is an automated mechanism for updating QoS through the PCRF in reaction to notification of media over hypertext markup language prefill depth. In accordance with the exemplary embodiments there is:
▪ A first communication element detecting a first event comprising that the user device media over hypertext markup language prefill has more than a threshold number of seconds of prefill (beyond "just-in-time"),
▪ The second communication element, in response to receiving signaling that the first event has been detected, performing an update to the QOS profile for that video user through the PCRF (or MO)

In accordance with the embodiment, the first communication element detecting the prefill can include at least one of:
▪ an explicit depth message from UE (inside of tcp/acks..), Apple Live Stream protocol, Microsoft smooth stream protocol, LTE air interface protocol or PCRF signaling protocol from UE to PCRF, or URL encoding of buffer depth, or PCRF signaling protocol from MO to PCRF);
▪ The notion is that there is already data being transferred in the one direction, from the media optimizer to the client in the UE for example, and this data is being sent within a TCP flow (or TCP connection). Each packet in a TCP flow contains sequencing information (a first octet number and a length), and the receiver of the packet is expected to send a response packet acknowledging its reception by sending a packet indicating the next octet number it expects - when the packet is successfully received in order, the next octet number is that first octet number plus the length: eg., if first octet is 555 and length is 1200, the acknowledgement will contain 1755 because the packet contains octets numbered 555 through 1754 (for a total of 1200 octets). If there is no data to send on this reverse flow (from UE to media optimizer), then the TCP stack will generate an empty packet (first octet = N and length = 0) with the ACK bit set. This packet is typically referred to as a TCP ACK packet.
▪ Extending this concept to explicitly indicate a buffer depth is as simple as sending a message from the client to the media optimizer in that reverse link - the message can be simple, formatted as a JSON document for example, such as "{ buffer_depth : 1048576 }". When this data is ready to be sent, the TCP stack will simply attach the data into a packet AND also set the header as appropriate for the downlink flow as the above-required response packet (that is, it becomes a TCP ACK packet with uplink data as well). The downlink packet also contains information about the uplink flow, so we should see an ack packet in that direction as well.
   - network based implicit detection of prefill level or depth;
   - prefill depth = Media Seconds delivered - (Current Time - (Start Time or Estimated Playout Start time));
   - prefill depth = Media Secs delivered - PlayedOutSecs;
   - PlayedOutSecs = Current Time - (Start Time or Estimated Playout Start time).

It is noted that the first communication element can be the user device 24 or any of the network devices 20, 21, and 22.

Further, in accordance with the exemplary embodiments of the invention, the second communication element performing an update to a QOS profile for the video user can include at least one of:
▪ decreasing priority (e.g. BE) or rate (e.g., guaranteed bit-rate (GBR)) of the flow when it is detected that the prefill depth is more than a threshold number of seconds; and/or
▪ increasing (or set back to normal/higher-level) the (e.g. BE) priority or (e.g., GBR) rate when it is detected that the prefill Depth is less than a threshold number of seconds.

It is noted that the communication element can be any of the network devices 20, 21, and 22 or the user equipment 24. Further, the communication element may include at least one of a media optimizer, video server, CDN , RSM , at a mid-point In the network bearer path).

In accordance with the exemplary embodiments of the invention there is at least a method and apparatus to perform updating of a QOS profile associated with user equipment, such as the user device 24, based at least in part on a prefill level or depth of media signal being sent to the user device. In accordance with an exemplary embodiment, the updating is performed using a PCRF. The PCRF can comprise at least one of a CAN-EG, media optimizer, and NBG.

### Percent Encoding Embodiment

In accordance with the exemplary embodiments of the invention, at least the prefill level/depth determination signaling can be initiated using percent-encoding, also known as uniform resource locator (URL) encoding. URL encoding is a mechanism for encoding information in a uniform resource identifier (URI).

Further, a radio subsystem management protocol (RSM) and/or signaling associated with hypertext markup language (HTML) signaling, such as the HTML used to display and play the media stream and/or update the prefill levels at least to the user. Such HTML associated signaling, in accordance with the exemplary embodiments, can be enacted using hypertext transfer protocol (HTTP), transmission control protocol/internet protocol (TCP/IP). In accordance with the exemplary embodiments, the above described exemplary signaling can be used to enable at least a determination of the prefill level or depth by the user device 24 and/or network device(s) 20, 21, and/or 22. Further, in accordance with the embodiments the signaling may be used for direct communication with an eNB or other network device serving the wireless communication network 1.

HTTP is an application protocol for distributed, collaborative, hypermedia information systems. HTTP is the foundation of data communication for the World Wide Web. Hypertext is a multi-linear set of objects, building a network by using logical links (the so-called hyperlinks) between the nodes (e.g. text or words). HTTP is the protocol to exchange or transfer hypertext. Transmission control protocol/internet protocol (TCP/IP) are communication protocols used for the Internet and similar networks, and generally the most popular protocol stack for wide area networks. It is commonly known as TCP/IP, because of its most important protocols: Transmission Control Protocol (TCP) and Internet Protocol (IP), which were the first networking protocols defined in this standard.

TCP/IP provides end-to-end connectivity specifying how data should be formatted, addressed, transmitted, routed and received at the destination. It has four abstraction layers, each with its own protocols. From lowest to highest, the layers are:
- the link layer (commonly Ethernet) which contains communication technologies for a local network;
- the internet layer (IP) connects local networks, thus establishing internetworking;
- the transport layer (TCP) handles host-to-host communication; and
- the application layer (for example HTTP) contains all protocols for specific data communications services on a process-to-process level (for example how a web browser communicates with a web server).

The TCP/IP model and related protocols are maintained by the Internet Engineering Task Force (IETF).

Furthermore, this decreasing of at least one of a priority level and a guaranteed bit rate then enables the eNB scheduling algorithm to defer to an even greater degree, prefill which is associated with a mobile where there is a greater level of interference. In other words if a particular prefilling mobile/eNB is (temporarily) generating particularly large levels of interference, then the scheduler will then preferably provide that UE with an even lower data rates and some other prefilling mobile in the same cell which is generating less interference.

In addition to eNB utilization increased levels of other cell interference can further influence the degree of prefilling. For example increased levels of other cell interference can reduce the number of available physical resource blocks, thereby increasing the percent of available physical resource blocks which are calculated as utilized. Additionally, the prefill may be throttled based on the eNB utilization on both the uplink and downlink, based on utilization over the back-haul, and based on CPU loading at the eNB.

In accordance with the exemplary embodiments of the invention the operations of the first and second communication elements, as described above, may be performed by the same communication element. Further, in accordance with the embodiments, the prefill update can be contingent on the level(s) of resource utilization associated with a bearer of the wireless communication network facilitating the media signal being sent to the user device. Thus, at least a method in accordance with the embodiments may only be allowed to direct additional prefill when the eNB and/or bearer utilization is below a threshold. In accordance with the exemplary embodiments the threshold level(s) can be remotely configurable by the provider or operator of the eNB or other network device. Then, in response to allowing or updating prefilling, updating the QOS in response to the current prefill depth as described.

Further, in accordance with the exemplary embodiments of the invention, physical resource block (PRB) utilization and rate messaging can be provided to a media optimizer or client impacting prefilling. Further, intervals for the messaging intervals may be adjusted based on a prefill level or depth of a media signal, a QoS associated with or assigned to the user device; and/or a load of a bearer associated with the media signal.

In accordance with the exemplary embodiments of the invention, the messaging and/or the prefill levels can be based on one or more thresholds set for the user device receiving the media signal. These thresholds can be dynamically adjusted based on processing capabilities of the user device as an example. In addition, the threshold(s) can be determined for the user device by the operator and also can be dynamically adjusted based on signaling from a network device, such as a media optimizer, eNB, and/or NBG, and adjusted based on a current or future link speed of bearers. These thresholds are used, in accordance with the embodiments, to detect or identify whether the prefilling depth is sufficiently greater than a minimum threshold, such as CSS_MIN, sufficiently lower than a maximum threshold such as CSS_MAX, and/or identify a relationship of the prefill to a medium threshold such as CSS_MID (this is a depth which is sufficient to provide continuity during anticipated service coverage gaps).

Further, in accordance with the exemplary embodiments of the invention, there is a mechanism for use in determining by the user device and/or the network device if prefilling was initially allowed in response to underutilized air interface resources (JIT ON/OFF). If prefilling was performed in response to an elevated risk of current and/or pending poor coverage then at least one of determining the prefill level or depth and updating characteristics of the media signal may, in accordance with the exemplary embodiments, can be stopped, cancelled, or delayed.

The exemplary embodiments of the invention enable a network, such as a cellular access network, to intelligently and quickly determine which packets on a bearer including a media signal can be delayed and which cannot. The exemplary embodiments of the invention can be implemented to the advantage of operators and users to improve performance and user experience as well as change priority of media signaling in order to intelligently schedule priority based on bearer utilization. The exemplary embodiments of the invention allow improved media optimization taking into account capabilities of the user device and the network.

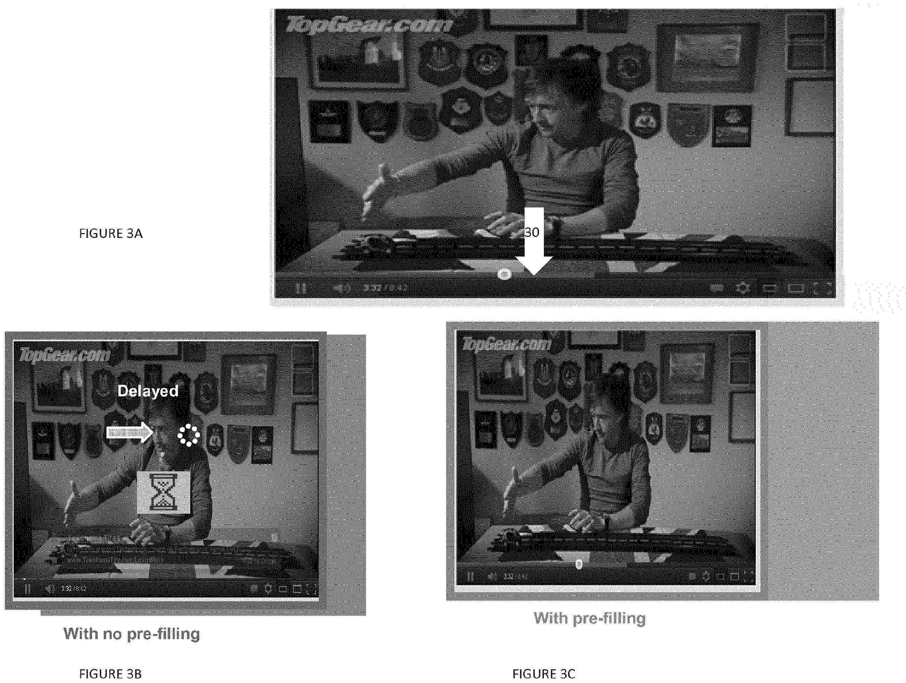

With regards to Figure 3A the arrow 30 shows the prefill area at the bottom of the video. The prefill area follows the play indicator circle and prefill area indicates the media received which has not yet been played. In accordance with the embodiments the video display window and the prefill area on part of an HTML type display. In Figures 3B and 3C there is illustrated video display with no pre-filling and with pre-filling, respectively. Figure 3B shows an http display of media over hypertext markup language that does not use pre-filling and there is no prefill area at the bottom of the display. Thus, in this case any change in the media signal throughput can cause a delayed video, as indicated by the hour glass. This type of video stream can be considered a "just in time" video stream. Whereas, Figure 3C illustrates a media over hypertext markup language using prefill with the prefill area shown at the bottom of the display. The advantages of the prefilling, as in Figure 3C, can benefit the user experience by eliminating or reducing delay of the played media signal.

### Prefill Level Detection With Network Device

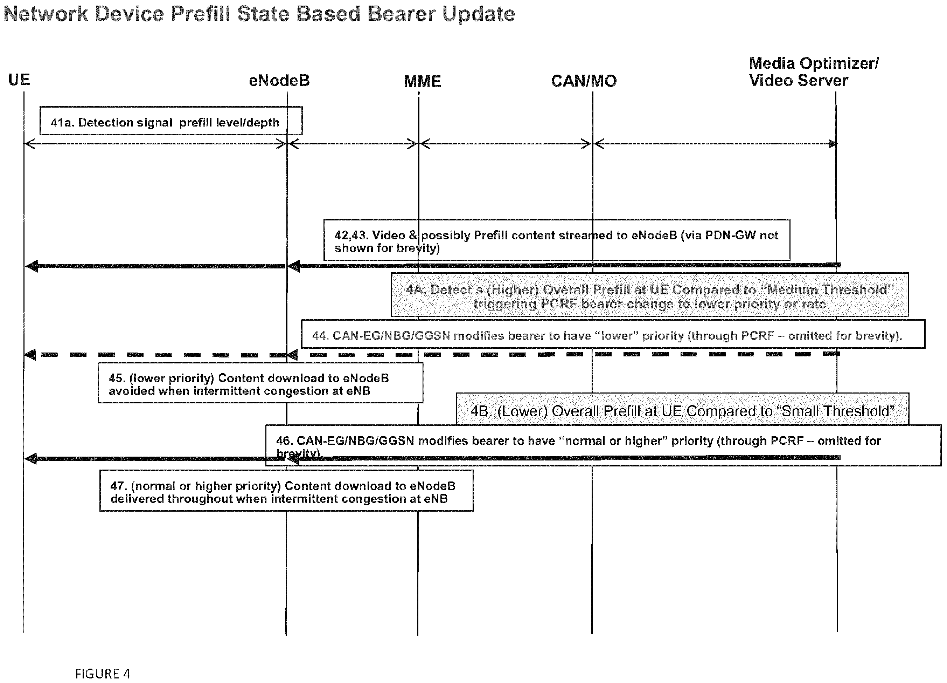

Figure 4 illustrates a method in accordance with an exemplary embodiment of the invention. As shown in block 41a there is detection signaling of prefill level/depth at the UE by a network device. In this case the detection can be performed by one or more or the eNodeB, MME, CAN/MO, and media optimizer. Lines 42, 43 show video and/or prefill content streamed to the eNodeB and then to the UE. In accordance with the exemplary embodiments of the invention, as shown in block 4A, a network device detects that the prefill of the UE is above a threshold, in this case a medium threshold. In response the network device initiates a trigger with a PCRF bearer change type function to lower the priority rate of the bearer. In accordance with the exemplary embodiments changing the bearer can include changing a QoS requirement of the media signal. Although in Figure 4 the priority is lowered, in accordance with the exemplary embodiments, the changing of the QoS requirement can be such that the media signal has less or more priority than other traffic. As shown at line 45, with the lower priority the content or media signal to the UE is lessened and further congestion may be avoided as a result. As shown in block 4B the lesser overall prefill at UE is then compared to another threshold, such as a minimum or medium threshold. As shown with regards to lines 46 and 47 of Figure 4 the network device responds to the prefill falling below this minimum or medium threshold by triggering the PCRF bearer change type function to modify a priority of the media stream to the UE to be normal or higher. In response the media signal and/or prefill is increased to the UE.

### Prefill Level Detection With User Device Embodiment

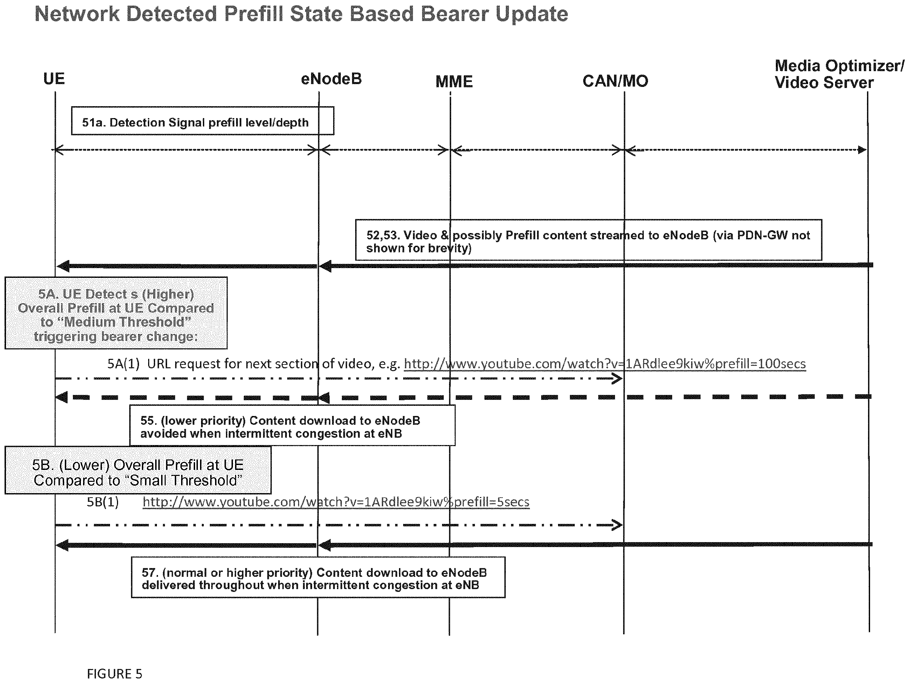

Figure 5 illustrates another method in accordance with the exemplary embodiments of the invention. As shown in block 51a there is detection of prefill level/depth at the UE and related signaling to one or more network devices. In this case by one or more or the eNodeB, MME, CAN/MO, and media optimizer. Lines 52, 53 show video and/or prefill content streamed to the eNodeB and then to the UE. In accordance with the exemplary embodiments of the invention, as shown in block 5A, a UE detects that the prefill of the UE is above or higher than a threshold, in this non-limiting case a medium threshold. In accordance with an exemplary embodiments of the invention, as illustrated in line 5A(1) the UE includes information regarding a prefill level of 100 seconds for a you tube video using a uniform resource locator. This signaling can have been initiated by a threshold, such as the CSS_MAX, being reached or exceeded. In response the UE triggers a bearer priority change for the media signal to the UE to be lower priority, as shown. This change can be a PCRF bearer change type function to the lower priority rate of the bearer. As stated above, in accordance with the exemplary embodiments changing the bearer can include changing a QoS requirement of the media signal. As shown at line 55, with the lower priority the content or media signal to the UE is lessened and further congestion may be avoided as a result. As shown in block 5B the lesser overall prefill at UE can then be compared to another lower threshold, such as a minimum or medium threshold. As shown with regards to line 57 of Figure 5 the UE responds to the prefill falling below this minimum or medium threshold by triggering the PCRF bearer change type function to modify a priority of the media stream to the UE to be normal or higher. Further, in accordance with an exemplary embodiments of the invention, as illustrated in line 5B(1) the UE signals information regarding a prefill level of 5 seconds for the you tube video using a uniform resource locator. This signaling can have been initiated by a threshold, such as the CSS_MIN, being reached or exceeded. In response the media signal and/or prefill is increased to the UE. It is noted that the media signal relating to youtube in this example is non-limiting and that, in accordance with the embodiments, the prefill level can relate to any kind of media signal.

### Bearer Utilization Detection Embodiment

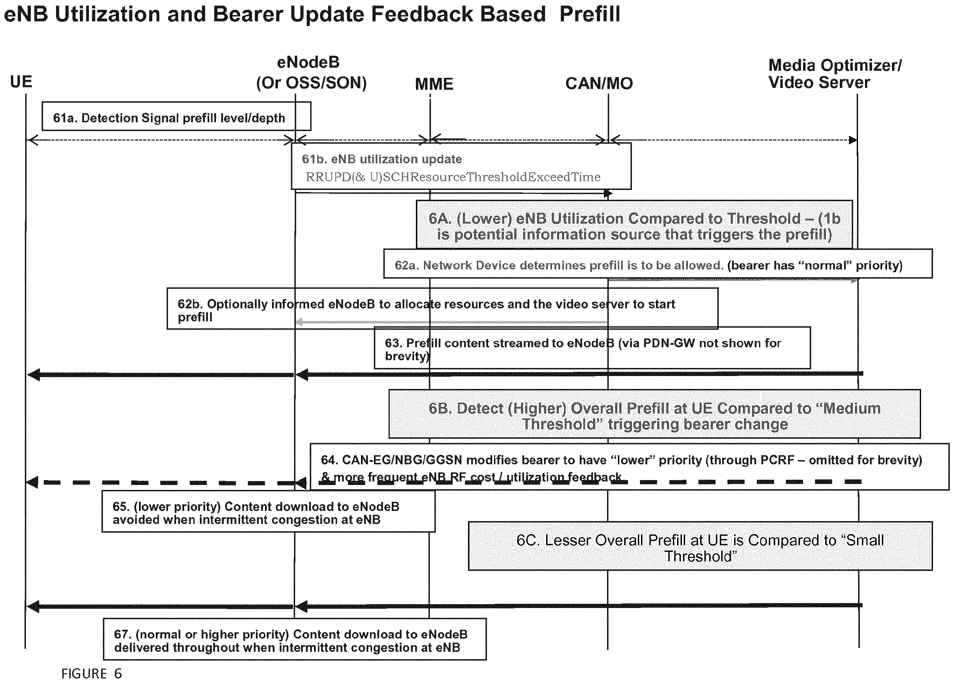

In Figure 6 there is illustrated another method in accordance with the exemplary embodiments of the invention. As shown in block 61a there is the optional detection of prefill level/depth at the UE and related signaling between the UE and one or more network devices. As shown at block 61b an eNB utilization update is communicated. It is noted that in accordance with the embodiments the bearer utilization or link speed can be determined based on detected signaling such TCP acknowledgments. As shown at block 6A the eNB utilization update indicates that bearer utilization is below a threshold of the prefill. In addition, in accordance with the embodiments, the eNB utilization update can trigger the prefill. In block 62a, it is shown that one or more or the network devices determines, based on the utilization update that media signal prefill is to be allowed and that the bearer has normal priority for the media signal to the UE. In accordance with the embodiments, the prefill, as shown in block 61a, may or may not have been allowed at the UE based on the bearer utilization. As shown in block 63 the prefill content is streamed to the eNB for delivery to the UE. It is noted that the prefill content may be streamed via a gateway, such as a packet data network (PDN) gateway. At block 6B it is shown that it is detected that a higher overall prefill is at the UE as compared to a medium threshold of the prefill, and a bearer priority change is triggered as a result. As shown in block 64 one of the network devices initiates a lowering of priority for the media signal to the UE. This change can be a PCRF bearer change type function to the lower priority rate of the bearer. As stated above, in accordance with the exemplary embodiments changing the bearer can include changing a QoS requirement of the media signal. As shown at line 55, with the lower priority the content or media signal to the UE can be very quickly lessened at the eNB as other load increases such that unnecessary delays and other traffic may be avoided as a result (further congestion may be avoided as a result). As shown in block 6C the lesser overall prefill at UE can then be compared to another lower or small threshold, such as a minimum or medium threshold. As shown with regards to line 67 of Figure 6 the Network responds to the prefill falling below this minimum or medium threshold by triggering another bearer change type function to modify a priority of the media stream to the UE to be normal or higher. In response the media signal and/or prefill is increased to the UE.

### Video Compression Detection & Estimation Embodiments

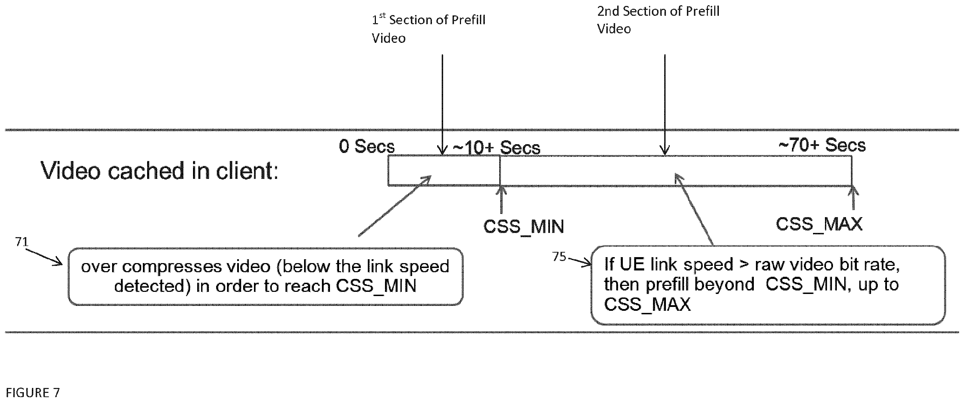

Figure 7 illustrates adjusting compression for the media stream prefill based on links speed and threshold settings in accordance with the exemplary embodiments of the invention. In accordance with the exemplary embodiments of the invention a determination of link speed of a bearer including the media signal can be detected. Figure 7 illustrates a 1^{st} section of prefill video before a minimum threshold CSS_MIN. Further, Figure 7 illustrates a 2^{nd} section of prefill video between CSS_MIN and the maximum threshold CSS_MAX. As shown in block 71 if the prefill is reduced below the CSS_MIN threshold and it is determined that a link speed of the media signal bearer is less than is required for the media signal the signaling. In accordance with the exemplary embodiments can initiate a compression or over compression of the video signal based on at least the diminished link speed. In accordance with the exemplary embodiments of the invention the compression rate of the media signal can be updated or controlled based on threshold levels and a current or pending link speed of the bearer associated with the media signal. This controlling can occur with the prefill level signaling and/or detection or separately. Similarly, if it is detected that the prefill is above the CSS_MIN threshold and below the CSS_MAX threshold, and it is detected that the UE link speed is greater than that required for the video stream, prefilling can continue up to the CSS_MAX with less or no compression of the media signal. These novel features of the invention allows the prefill level or depth to be maintained within the thresholds using video bit rate and/or compression control based on a current link speed of the bearer for the media signal. In accordance with the embodiments, the current link speed of the bearer supplying the media signal can be determined based on TCP/IP acknowledgement signaling on the link. In accordance with the exemplary embodiments an upcoming change of the link speed can be predicted, and the video bit rate and/or compression control for the prefill can be performed either before or after the predicted change in link speed. Such predictions can be based on a determined location of the user device and/or an indication that the user device will be obstructed somehow. For example, if the coordinates and/or movement of the user device indicate that the user device is entering or leaving a tunnel these operations can be performed accordingly.

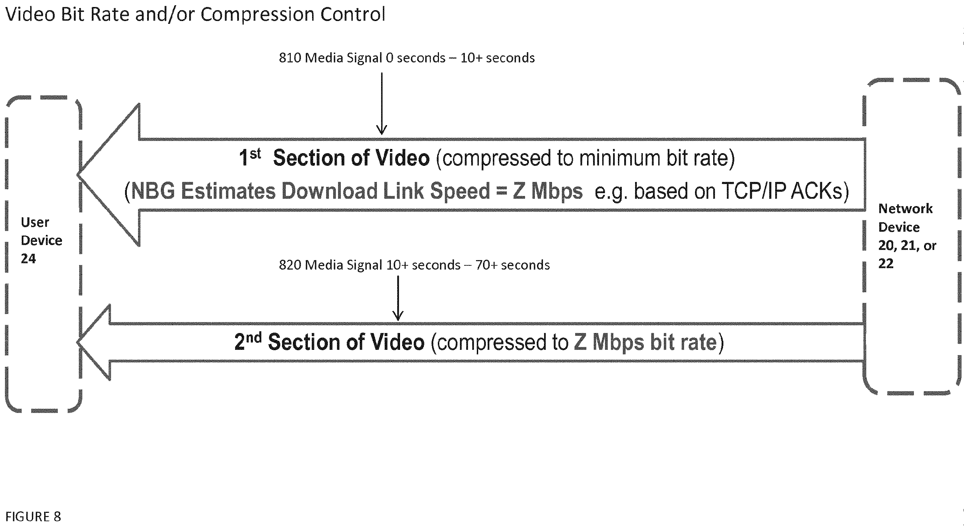

Figure 8 illustrates an operation of the above described compression embodiment with relation to a 1^{st} section and a 2^{nd} section of prefill video such as is shown in Figure 7. In block 810, the 1^{st} section of the video prefill, which is below CSS_MIN, is compressed to, in this case, Z Mbps such That it will pass more media signal in the slower bit rate. In accordance with the exemplary embodiments this function can be performed when it is determined by a network device, in this case a Nokia Siemens browing gateway (NBG) that the link speed of the media signal bearer is slowed or predicted to be slowed. As stated above, it may be predicted based at least on at least a location and direction of movement of the user device that the user device is going to be obstructed, such as by a tunnel. The compression is initiated or increased as a result so that the media signaling is still sufficient over the slow link to maintain the prefill level between CSS_MIN and CSS_MAX. Then, as shown in block 820 when the prefill has reached a number of seconds between the CSS_MIN e.g. 10+ seconds prefill and the CSS_MAX e.g.70+ seconds of prefill the compression is adjusted or stopped accordingly. In addition, in accordance with the exemplary embodiments of the invention, if the current link speed increases at any time during the prefill, the compression rate may be adjusted at that time.

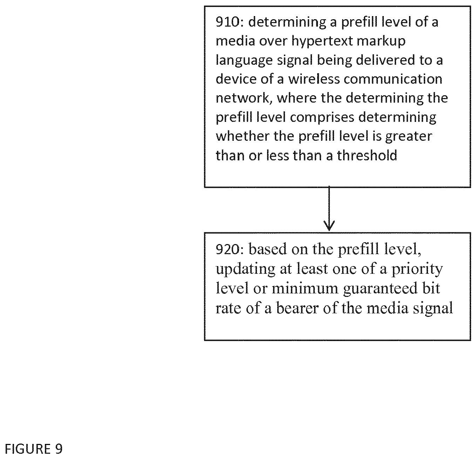

Figure 9 is a block diagram illustrating a method in accordance with the exemplary embodiments of the invention. In block 910 there is determining a prefill level of a media over hypertext markup language signal being delivered to a device of a wireless communication network, where the determining the prefill level comprises determining whether the prefill level is greater than or less than a threshold. Then in block 920 there is, based on the prefill level, updating at least one of a priority level or minimum guaranteed bit rate of a bearer of the media signal.

In accordance with the exemplary embodiments of the invention as described in the paragraph above, for the case that it is determined that the prefill level is greater than the threshold the updating comprises: sending by the device towards at least one network node of the wireless communication network messaging comprising a request to decrease the at least one of the priority level and the bit rate of the bearer of the media signal, and for the case that it is determined that the prefill level is less than the threshold, sending towards the wireless communication network messaging comprising a request to increase the at least one of a priority level and a bit rate flow of the media signal.

In accordance with the exemplary embodiments of the invention as described in the paragraphs above, the determining the prefill level comprises detecting whether the prefill level of the media signal is greater than or less than a threshold.

In accordance with the exemplary embodiments of the invention as described in the paragraphs above, for the case that it is determined that the prefill level is greater than the threshold, the updating comprises decreasing the at least one of the priority level and the bit rate of the media signal.

In accordance with the exemplary embodiments of the invention as described in the paragraphs above, for the case that it is determined that the prefill level is less than the threshold, the updating comprises increasing at least one of a priority level and a bit rate flow of the media signal.

In accordance with the exemplary embodiments of the invention as described in the paragraphs above, the threshold is based on a number of seconds of the media signal delivered to the device.

In accordance with the exemplary embodiments of the invention as described in the paragraphs above, the prefill level is implicitly determined by a network element as (a number of seconds to render of the media signal delivered thus far to the device - (current time - (start time)), where the start time can be an estimated playout start time.

In accordance with the exemplary embodiments of the invention as described in the paragraphs above the prefill level is implicitly determined by at least one of with one of a media optimizer device, a video server, a content distribution device and a radio system module.

In accordance with the exemplary embodiments of the invention as described in the paragraphs above, one of with one of a media optimizer device, a video server, a content distribution device and a radio system module from messaging from the user equipment.

In accordance with the exemplary embodiments of the invention as described in the paragraphs above the messaging from the device comprises uniform resource locator encoding of the buffer depth.

In accordance with the exemplary embodiments of the invention as described in the paragraphs above, the messaging from the device comprises long term evolution (LTE) air interface signaling.

In accordance with the exemplary embodiments of the invention as described in the paragraphs above the messaging from the device comprises an indication within a TCP/IP acknowledgment.

In accordance with the exemplary embodiments of the invention as described in the paragraphs above, where performing at least one of the determining and the updating is contingent on at least one of a current coverage quality and an expected coverage quality for the device in the wireless communication network.

In accordance with the exemplary embodiments of the invention as described in the paragraphs above, the at least one of the determining and the updating is not performed if the at least one of the current coverage quality and the expected coverage quality is below a level determined for the device.

In accordance with the exemplary embodiments of the invention as described in the paragraphs above, the threshold is dynamic based on the at least one of the current coverage quality and the expected coverage quality for the device.

In accordance with the exemplary embodiments of the invention as described in the paragraphs above, at least one of the determining and the updating is only performed if the prefilling was initiated in response to resources available for the delivering being underutilized.

In accordance with the exemplary embodiments of the invention as described in the paragraphs above, the updating comprises sending messaging regarding changing at least one of a priority level and bit rate of the media signal to a policy control and charging rules function of the wireless communication network.

In accordance with the exemplary embodiments of the invention as described in the paragraphs above, the policy control and charging rules function is associated with one of a media optimizer device, a video server, a content distribution device and a radio system module.

In accordance with the exemplary embodiments of the invention as described in the paragraphs above, the determining is performed over hypertext transfer protocol.

In accordance with the exemplary embodiments of the invention as described in the paragraphs above, the media signal comprises at least one of video over HTML, Apple Live Stream, Microsoft Smooth Stream, HTTP adaptive streaming, and progressive download video.

In addition, the method according to the exemplary embodiments of the invention may be performed by an apparatus comprising at least one processor, and at least one computer readable memory embodying at least one computer program code, where the at least one computer readable memory embodying the at least one computer program code is configured, with the at least one processor to perform the method according to at least the paragraphs above.

Further, in accordance with the exemplary embodiments of the invention, there is an apparatus comprising means for determining a prefill level of a media over hypertext markup language signal being delivered to a device of a wireless communication network, where the determining the prefill level comprises means for determining whether the prefill level is greater than or less than a threshold, and means, based on the prefill level, for updating at least one of a priority level or minimum guaranteed bit rate of a bearer of the media signal.

In accordance with the exemplary embodiments as described in the paragraph above, for the case that it is determined that the prefill level is greater than the threshold, the means for updating comprises sending by the device towards at least one network node of the wireless communication network messaging comprising a request to decrease the at least one of the priority level and the bit rate of the bearer of the media signal, and where for the case that it is determined that the prefill level is less than the threshold, the means for updating comprises sending towards the wireless communication network messaging comprising a request to increase the at least one of a priority level and a bit rate flow of the media signal.

In accordance with the exemplary embodiments as described in the paragraph above, the at least one network node of the wireless communication network comprises at least one of a media optimizer device, a video server, a content distribution device and a radio system module of the wireless communication network.

In accordance with the exemplary embodiments as described in the paragraph above, the messaging comprises long term evolution air interface signaling.

In accordance with the exemplary embodiments as described in the paragraph above, the messaging comprises an indication of the prefill level within a TCP/IP acknowledgment.

In accordance with the exemplary embodiments as described in the paragraph above, the messaging comprises a uniform resource locator encoding regarding the prefill level.

In accordance with the exemplary embodiments as described in the paragraph above, the messaging comprises an indication of the prefill level as (a number of seconds to render the media signal delivered thus far to the device - (current time - (start time)), where the start time can be an estimated playout start time.

In accordance with the exemplary embodiments as described in the paragraph above, there is means for determining at least one of a current coverage quality and an expected coverage quality for the device, where at least one of the determining and the updating is not performed if the at least one of a current coverage quality and an expected coverage quality is below a level determined for the device.

In accordance with the exemplary embodiments as described in the paragraph above, the threshold is dynamic based on the at least one of the current coverage quality and the expected coverage quality for the device.

In accordance with the exemplary embodiments as described in the paragraph above, at least one of the determining and the updating is only performed if the prefilling was initiated in response to resources available for the media over hypertext markup language signal being underutilized.

In accordance with the exemplary embodiments as described in the paragraph above, the updating comprises sending messaging regarding changing at least one of a priority level and bit rate of the media signal to a policy control and charging rules function of the wireless communication network.

In accordance with the exemplary embodiments as described in the paragraph above, the media signal comprises at least one of video over HTML, Apple Live Stream, Microsoft Smooth Stream, HTTP adaptive streaming, and progressive download video.

The apparatus according to the paragraph above, where the means for determining and updating comprises an interface to a wireless communication network, and at least one computer readable memory embodying at least one computer program code, the at least one computer program code executed by at least one processor.

In general, the various embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of exemplary and non-limiting examples a full and informative description of the best method and apparatus presently contemplated by the inventors for carrying out the invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention.

It should be noted that the terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and/or printed electrical connections, as well as by the use of electromagnetic energy, such as electromagnetic energy having wavelengths in the radio frequency region, the microwave region and the optical (both visible and invisible) region, as several non-limiting and non-exhaustive examples.

Furthermore, some of the features of the preferred embodiments of this invention could be used to advantage without the corresponding use of other features. As such, the foregoing description should be considered as merely illustrative of the principles of the invention, and not in limitation thereof.

## Claims

1. A method implemented in a processor (20A, 21A, or 22A) of a user device (24) of a wireless communication network (1), comprising determining (910) a prefill level, **characterized in that** the prefill level is for media being delivered over a hypertext markup language signal to the user device but the media associated with the prefill level is not yet viewed at the user device, where the determining the prefill level comprises determining whether the prefill level is greater than or less than a threshold;
for the case that it is determined that the prefill level is greater than the threshold, sending by the user device (24) towards at least one network node (20, 21, or 22) of the wireless communication network (1) messaging comprising a request to decrease (920) at least one of a priority level and a bit rate of a bearer of the media signal; and
for the case that it is determined that the prefill level is less than the threshold, sending by the user device (24) towards the wireless communication network (1) messaging comprising a request to increase (920) the at least one of a priority level and a bit rate of a bearer of the media signal.

2. The method of claim 1, wherein the at least one network node (20, 21, or 22) of the wireless communication network (1) comprises at least one of a media optimizer device, a video server, a content distribution device and a radio system module of the wireless communication network (1).

3. The method according to claim 1, wherein the messaging comprises long term evolution air interface signaling.

4. The method according to claim 1, wherein the messaging comprises an indication of the prefill level within a TCP/IP acknowledgment.

5. The method according to claim 1, wherein the messaging comprises a uniform resource locator encoding regarding the prefill level.

6. The method according to claim 1, where the messaging comprises an indication of the prefill level as a number of seconds to render the media signal delivered thus far to the user device (24) minus current time minus start time), where the start time can be an estimated playout start time.

7. The method according to claim 1, comprising determining at least one of a current coverage quality and an expected coverage quality for the user device (24).

8. The method according to claim 7, where the threshold is dynamic based on the at least one of the current coverage quality and the expected coverage quality for the user device (24).

9. The method according to claim 1, where the determining is only performed if the prefilling was initiated in response to resources available for the media over the hypertext markup language signal being underutilized.

10. The method according to claim 1, messaging regarding changing at least one of a priority level and bit rate of a bearer of the media signal is sent to a policy control and charging rules function of the wireless communication network (1).

11. The method according to claim 1, where the media signal comprises at least one of video over HTML, Apple Live Stream, Microsoft Smooth Stream, HTTP adaptive streaming, and progressive download video.

12. A memory embodying computer program code, the computer program code executed by at least one processor to perform the method according as in any one of claims 1-11.

13. A user device (24) of a wireless communication network (1), comprising:
at least one processor(24A); and
at least one memory including computer program code, where the at least one memory (24B) and the computer program code (24C) are configured, with the at least one processor, to cause the user device (24) to at least:
determine (910) a prefill level of a media, **characterized in that** the prefill level is being delivered over a hypertext markup language signal to the user device (24) but the media associated with the prefill level is not yet viewed at the user device, where the determining the prefill level comprises determining whether the prefill level is greater than or less than a threshold;
for the case that it is determined that the prefill level is greater than the threshold, send towards at least one network node (20, 21, or 22) of the wireless communication network (1) messaging comprising a request to decrease (920) at least one of a priority level and a bit rate of a bearer of the media signal; and
for the case that it is determined that the prefill level is less than the threshold, send towards the wireless communication network (1) messaging comprising a request to increase (920) the at least one of a priority level and a bit rate of a bearer of the media signal.

## Patentansprüche

1. Verfahren, das in einem Prozessor (20A, 21A oder 22A) einer Benutzervorrichtung (24) eines drahtlosen Kommunikationsnetzwerks (1) implementiert ist, umfassend das Bestimmen (910) einer Vorfüllebene, **dadurch gekennzeichnet, dass** die Vorfüllebene für Medien ist, die über ein Hypertext-Markup-Sprachsignal an die Benutzervorrichtung geliefert werden, aber das der Vorfüllebene zugeordnete Medium noch nicht bei der Benutzervorrichtung betrachtet wird, wobei das Bestimmen der Vorfüllebene das Bestimmen umfasst, ob die Vorfüllebene größer oder kleiner als ein Schwellenwert ist;
für den Fall, dass bestimmt wird, dass die Vorfüllebene größer als der Schwellenwert ist, Senden einer Nachrichtenübermittlung durch die Benutzervorrichtung (24) zu mindestens einem Netzwerkknoten (20, 21 oder 22) des drahtlosen Kommunikationsnetzwerks (1) mit einer Anforderung zur Verringerung (920) von mindestens einer Prioritätsebene und einer Bitrate eines Trägers des Mediensignals; und
für den Fall, dass bestimmt wird, dass die Vorfüllebene kleiner als der Schwellenwert ist, Senden einer Nachrichtenübermittlung durch die Benutzervorrichtung (24) zum drahtlosen Kommunikationsnetzwerks (1) mit einer Anforderung zur Erhöhung (920) von mindestens einer der Prioritätsebenen und einer Bitrate eines Trägers des Mediensignals.

2. Verfahren nach Anspruch 1, wobei der mindestens eine Netzwerkknoten (20, 21 oder 22) des drahtlosen Kommunikationsnetzwerks (1) mindestens eine von einer Medienoptimierungsvorrichtung, einem Videoserver, einer Inhaltsverteilungsvorrichtung und einem Funksystemmodul des drahtlosen Kommunikationsnetzwerks (1) umfasst.

3. Verfahren nach Anspruch 1, wobei die Nachrichtenübermittlung eine Langzeit-Entwicklungs-Luftschnittstellensignalisierung umfasst.

4. Verfahren nach Anspruch 1, wobei die Nachrichtenübermittlung eine Angabe der Vorfüllebene innerhalb einer TCP/IP-Bestätigung umfasst.

5. Verfahren nach Anspruch 1, wobei die Nachrichtenübermittlung einen einheitlichen Ressourcen-Lokalisierer in Bezug auf die Vorfüllebene umfasst.

6. Verfahren nach Anspruch 1, wobei die Nachrichtenübermittlung eine Angabe der Vorfüllebene als Anzahl von Sekunden umfasst, um das bisher an die Benutzervorrichtung (24) gelieferte Mediensignal abzüglich der aktuellen Zeit abzüglich der Startzeit zu rendern, wobei die Startzeit eine geschätzte Ausspielstartzeit sein kann.

7. Verfahren nach Anspruch 1, umfassend die Bestimmung mindestens einer von einer aktuellen Versorgungsqualität und einer erwarteten Versorgungsqualität für die Benutzervorrichtung (24).

8. Verfahren nach Anspruch 7, bei dem der Schwellenwert dynamisch ist, basierend auf der mindestens einen der aktuellen Versorgungsqualität und der erwarteten Versorgungsqualität für die Benutzervorrichtung (24).

9. Verfahren nach Anspruch 1, bei dem die Bestimmung nur dann durchgeführt wird, wenn die Vorfüllung als Antwort auf die für die Medien verfügbaren Ressourcen über das Hypertext-Markup-Sprachsignal eingeleitet wurde, das nicht ausgelastet ist.

10. Verfahren nach Anspruch 1, Nachrichtenübermittlung in Bezug auf die Änderung mindestens einer Prioritätsebene und der Bitrate eines Trägers des Mediensignals, wird an eine Richtlinienkontroll- und Entgelterhebungsfunktion des drahtlosen Kommunikationsnetzwerks (1) gesendet.

11. Verfahren nach Anspruch 1, wobei das Mediensignal mindestens eines von Video über HTML, Apple Live Stream, Microsoft Smooth Stream, HTTP Adoptiv-Streaming und progressives Download-Video umfasst.

12. Speicher, der Computerprogrammcode enthält, wobei der Computerprogrammcode von mindestens einem Prozessor ausgeführt wird, um das Verfahren gemäß einem der Ansprüche 1-11 durchzuführen.

13. Benutzervorrichtung (24) eines drahtlosen Kommunikationsnetzwerks (1), umfassend:
mindestens einen Prozessor (24A); und
mindestens einen Speicher mit Computerprogrammcode, wobei der mindestens eine Speicher (24B) und der Computerprogrammcode (24C) mit dem mindestens einen Prozessor so konfiguriert sind, dass er das Benutzervorrichtung (24) mindestens veranlasst:
Bestimmen (910) einer Vorfüllebene eines Mediums, **dadurch gekennzeichnet, dass** die Vorfüllebene über ein Hypertext-Markup-Sprachsignal an die Benutzervorrichtung (24) geliefert wird, aber das der Vorfüllebene zugeordnete Medium noch nicht an der Benutzervorrichtung betrachtet wird, wobei die Bestimmung der Vorfüllebene die Bestimmung umfasst, ob die Vorfüllebene größer oder kleiner als ein Schwellenwert ist;
für den Fall, dass bestimmt wird, dass die Vorfüllebene größer als der Schwellenwert ist, Senden einer Nachrichtenübermittlung zu mindestens einem Netzwerkknoten (20, 21 oder 22) des drahtlosen Kommunikationsnetzwerks (1) mit einer Anforderung zur Verringerung (920) von mindestens einer Prioritätsebene und einer Bitrate eines Trägers des Mediensignals; und
für den Fall, dass bestimmt wird, dass die Vorfüllebene kleiner als der Schwellenwert ist, Senden einer Nachrichtenübermittlung zum drahtlosen Kommunikationsnetzwerks (1) mit einer Anforderung zur Erhöhung (920) von mindestens einer der Prioritätsebenen und einer Bitrate eines Trägers des Mediensignals.

## Revendications

1. Un procédé mis en oeuvre dans un processeur (20A, 21A ou 22A) d'un dispositif d'utilisateur (24) d'un réseau de communication sans fil (1), comprenant la détermination (910) d'un niveau de pré-remplissage, **caractérisé en ce que** le niveau de pré-remplissage est destiné à des supports multimédias qui sont remis par l'intermédiaire d'un signal de langage de balisage hypertexte au dispositif d'utilisateur mais le support multimédia associé au niveau de pré-remplissage n'est pas encore visionné au niveau du dispositif d'utilisateur, la détermination du niveau de pré-remplissage comprenant la détermination si le niveau de pré-remplissage est supérieur ou inférieur à un seuil,
dans le cas où il est déterminé que le niveau de pré-remplissage est supérieur au seuil, l'envoi par le dispositif d'utilisateur (24) vers au moins un noeud de réseau (20, 21 ou 22) du réseau de communication sans fil (1) de messages comprenant une demande de diminution (920) d'au moins un élément parmi un niveau de priorité et un débit binaire d'une porteuse du signal multimédia, et
dans le cas où il est déterminé que le niveau de pré-remplissage est inférieur au seuil, l'envoi par le dispositif d'utilisateur (24) vers le réseau de communication sans fil (1) de messages comprenant une demande d'augmentation (920) du au moins un élément parmi un niveau de priorité et un débit d'une porteuse binaire du signal multimédia.

2. Le procédé selon la revendication 1, dans lequel le au moins un noeud de réseau (20, 21 ou 22) du réseau de communication sans fil (1) comprend au moins un dispositif parmi un dispositif d'optimisation de supports multimédias, un serveur vidéo, un dispositif de distribution de contenus et un module de système radio du réseau de communication sans fil (1) .

3. Le procédé selon la revendication 1, dans lequel les messages comprennent une signalisation d'interface hertzienne à évolution à long terme.

4. Le procédé selon la revendication 1, dans lequel les messages comprennent une indication du niveau de pré-remplissage à l'intérieur d'un accusé de réception TCP/IP.

5. Le procédé selon la revendication 1, dans lequel les messages comprennent un codage de localisateur de ressources uniforme concernant le niveau de pré-remplissage.

6. Le procédé selon la revendication 1, dans lequel les messages comprennent une indication du niveau de pré-remplissage sous la forme d'un nombre de secondes nécessaires pour rendre le signal multimédia remis à ce stade au dispositif d'utilisateur (24) moins l'heure courante moins l'heure de début, l'heure de début pouvant être une heure de début de lecture estimée.

7. Le procédé selon la revendication 1, comprenant la détermination d'au moins une qualité parmi une qualité de couverture actuelle et une qualité de couverture attendue pour le dispositif d'utilisateur (24).

8. Le procédé selon la revendication 7, dans lequel le seuil est dynamique en fonction de la au moins une qualité parmi la qualité de couverture actuelle et la qualité de couverture attendue pour le dispositif d'utilisateur (24).

9. Le procédé selon la revendication 1, dans lequel la détermination est uniquement exécutée si le pré-remplissage a été lancé en réponse à une sous-utilisation de ressources disponibles pour le support multimédia par l'intermédiaire du signal de langage de balisage hypertexte.

10. Le procédé selon la revendication 1,
des messages concernant la modification d'au moins un élément parmi un niveau de priorité et un débit binaire d'une porteuse du signal multimédia sont envoyés à une fonction de règles de taxation et de commande de politique du réseau de communication sans fil (1).

11. Le procédé selon la revendication 1, dans lequel le signal multimédia comprend au moins un élément parmi vidéo sur HTML, Apple Live Stream, Microsoft Smooth Stream, diffusion en continu adaptative HTTP et vidéo en téléchargement progressif.

12. Une mémoire incorporant du code de programme informatique, le code de programme informatique étant exécuté par au moins un processeur de façon à exécuter le procédé selon l'une quelconque des revendications 1 à 11.

13. Un dispositif d'utilisateur (24) d'un réseau de communication sans fil (1), comprenant :
au moins un processeur(24A), et
au moins une mémoire comprenant du code de programme informatique, la au moins une mémoire (24B) et le code de programme informatique (24C) étant configurés, avec le au moins un processeur, de façon à amener le dispositif d'utilisateur (24) à au moins :
déterminer (910) un niveau de pré-remplissage d'un support multimédia, **caractérisé en ce que** le niveau de pré-remplissage est remis par l'intermédiaire d'un signal de langage de balisage hypertexte au dispositif d'utilisateur (24) mais le support multimédia associé au niveau de pré-remplissage n'est pas encore visionné au niveau du dispositif d'utilisateur, la détermination du niveau de pré-remplissage comprenant la détermination si le niveau de pré-remplissage est supérieur ou inférieur à un seuil,
dans le cas où il est déterminé que le niveau de pré-remplissage est supérieur au seuil, envoyer vers au moins un noeud de réseau (20, 21 ou 22) du réseau de communication sans fil (1) des messages comprenant une demande de diminution (920) d'au moins un élément parmi un niveau de priorité et un débit binaire d'une porteuse du signal multimédia, et
dans le cas où il est déterminé que le niveau de pré-remplissage est inférieur au seuil, envoyer vers le réseau de communication sans fil (1) des messages comprenant une demande d'augmentation (920) du au moins un élément parmi un niveau de priorité et un débit binaire d'une porteuse du signal multimédia.
